# EUROPEAN PATENT APPLICATION

(11) **EP 4 636 678 A1**
(43) Date of publication of application: **22.10.2025**
(21) Application number: 23903334.3
(22) Date of filing: 04.12.2023
(51) Int. Cl.: G06Q 50/10

(54) **INFORMATION PROCESSING DEVICE, INFORMATION PROCESSING METHOD, AND PROGRAM**

(30) Priority: 13.12.2022 JP 2022198861
(71) Applicant: Sony Group Corporation, Tokyo 108-0075 (JP)
(72) Inventor: NONOYAMA, Yo, Tokyo 108-0075 (JP); SHINTANI, Eiji, Tokyo 108-0075 (JP); KOEDA, Tatsuya, Tokyo 108-0075 (JP); MORIKUNI, Baku, Tokyo 108-0075 (JP); HIRANO, Shinsaku, Tokyo 108-0075 (JP); ITO, Keisuke, Tokyo 108-0075 (JP); ABE, Hajime, Tokyo 108-0075 (JP); NAKAYAMA, Ryosuke, Tokyo 108-0075 (JP); SHIMIZU, Yoshihiro, Tokyo 108-0075 (JP); MIYAZAKI, Yukako, Tokyo 108-0075 (JP); TAKAHASHI, Masahiro, Tokyo 108-0075 (JP)
(74) Representative: D Young & Co LLP
(86) International application number: PCT/JP2023/043225
(87) International publication number: WO 2024/128045

(57) **Abstract**

An information processing device includes an arithmetic unit that performs processing for changing the form of a virtual locker in a virtual space on the basis of game information serving as information about a game, the virtual space containing one or a plurality of virtual lockers located in a club house serving as a virtual space.

## Description

### [Technical Field]

The present technique relates to an information processing device, an information processing method, and a program and particularly relates to a service technique for providing a virtual space in accordance with a game.

### [Background Art]

In recent years, there have been services that provide various types of information during games of baseball, soccer, basketball, and other sports.

For example, PTL 1 describes a system that acquires information on the progress of a game and the content of play in real time at a game venue, centrally manages the information at a center, and provides the information to a third party.

Furthermore, PTL 2 describes a communication processing system capable of sequentially reporting game information about multiple games being held at multiple stadiums.

### [Citation List]

### [Patent Literatures]

[PTL 1]
   JP 2002-268806 A
[PTL 2]
   JP H8-299525 A

### [Summary]

### [Technical Problem]

Many supporters visit stadiums as spectators to watch games of sports such as baseball, soccer, and basketball. In addition, many people watch live TV broadcasts. To develop sports culture, it is desirable to increase the level of satisfaction and enjoyment of spectators watching games.

Thus, the present disclosure proposes a technique for providing service capable of enhancing the enjoyment of users who are spectators watching games.

### [Solution to Problem]

An information processing device according to the present technique includes an arithmetic unit that performs processing for changing the form of a virtual locker in a virtual space on the basis of game information serving as information about a game, with the virtual space containing one or more virtual lockers that are located in a virtual club house.

For example, according to game information such as information determined for the game and information generated with the progress of the game, the form of the locker of the club house in the virtual space, for example, image contents and sound output are changed.

### [Brief Description of Drawings]

[Fig. 1]

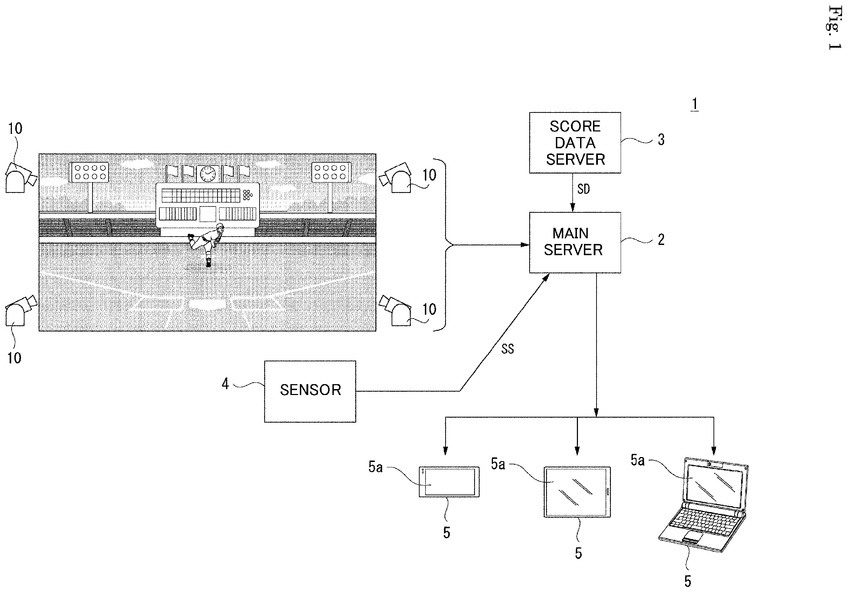

   Fig. 1 is an explanatory drawing of an information provision system according to an embodiment of the present technique.
[Fig. 2]

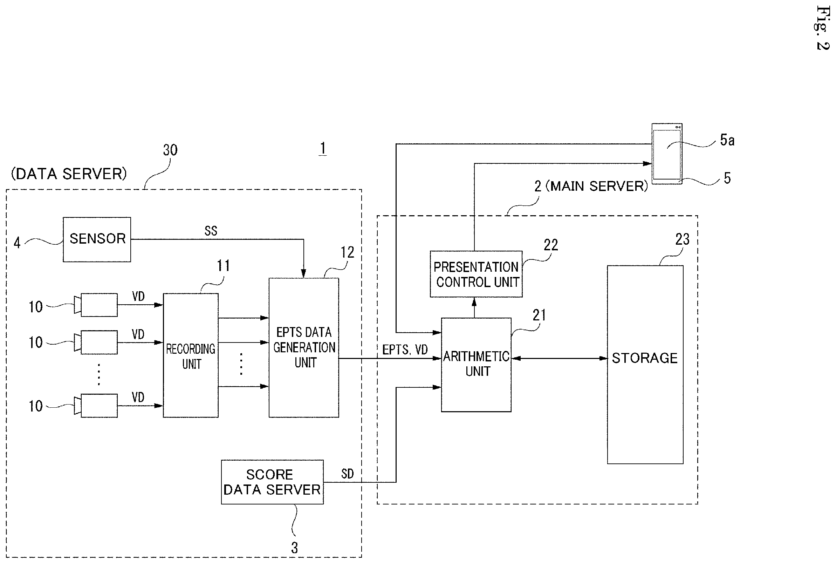

   Fig. 2 is a block diagram of the information provision system according to the embodiment.
[Fig. 3]

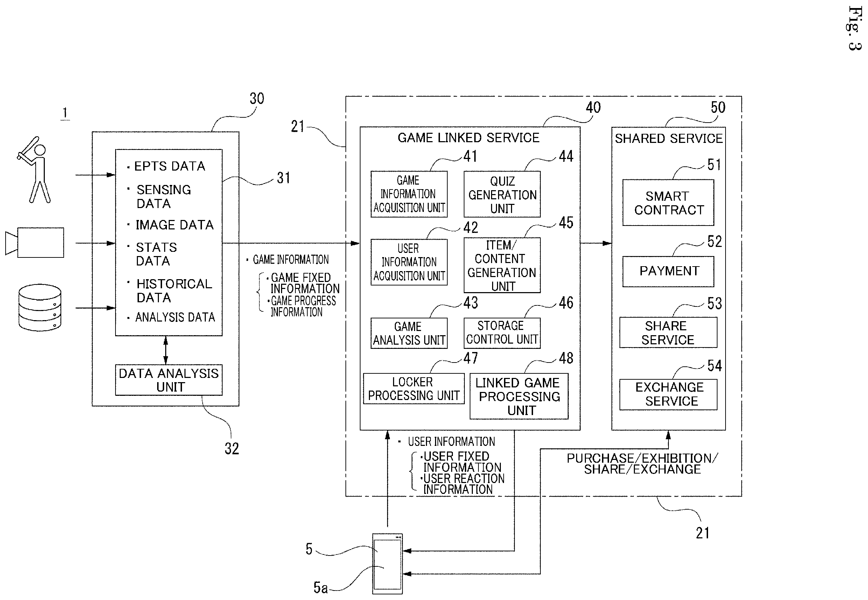

   Fig. 3 is an explanatory drawing of the information provision system according to the embodiment.
[Fig. 4]

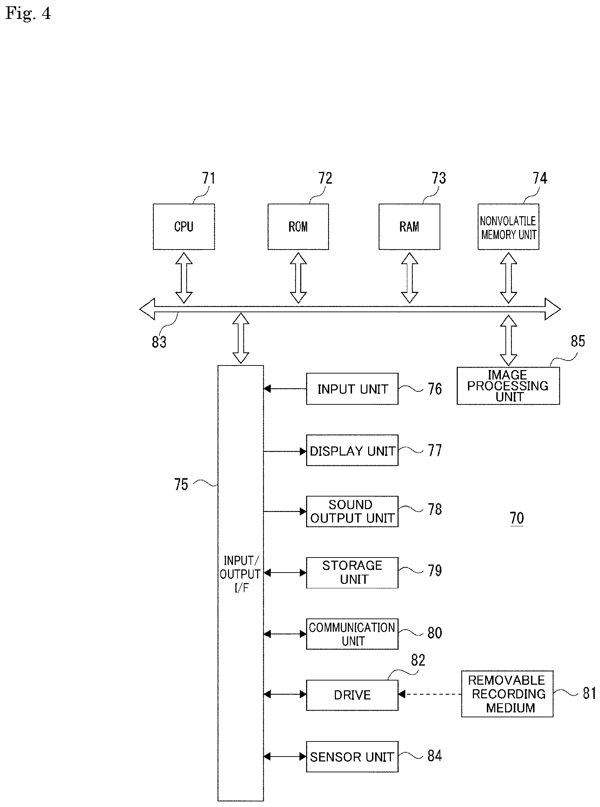

   Fig. 4 is a block diagram of an information processing device according to the embodiment.
[Fig. 5]

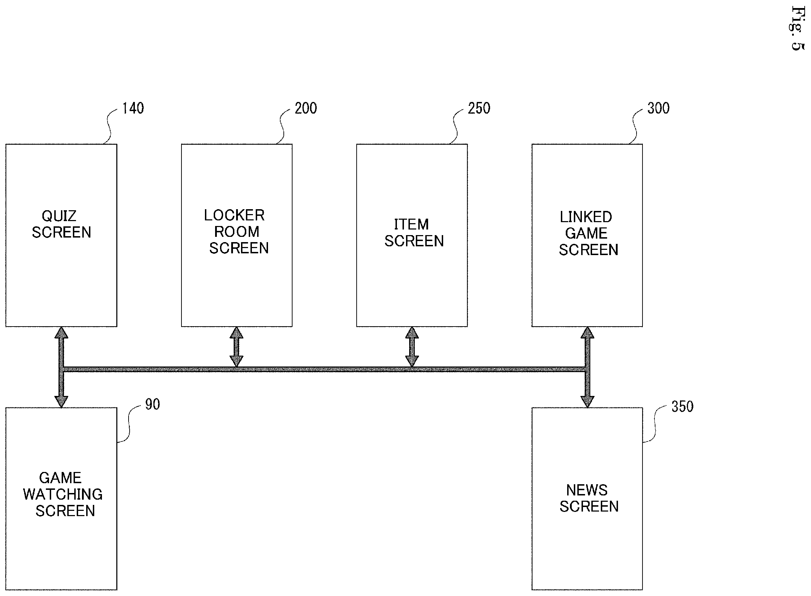

   Fig. 5 is an explanatory drawing of a screen example of game linked service according to the embodiment.
[Fig. 6]

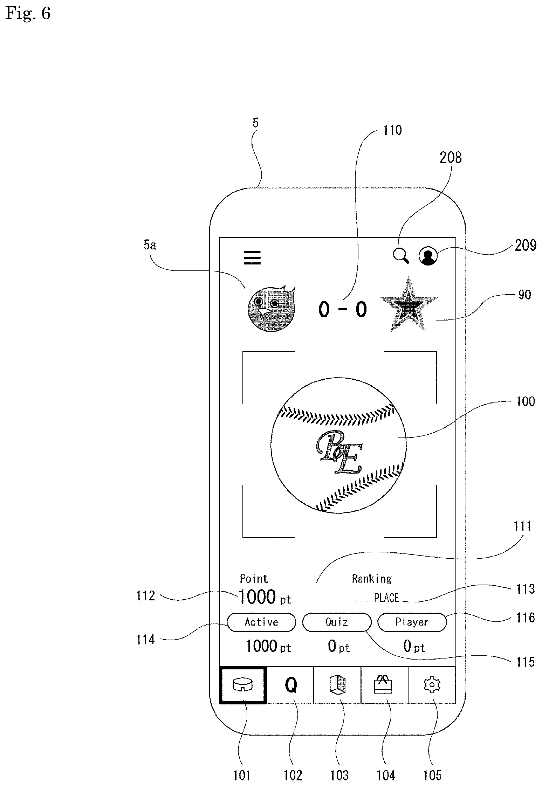

   Fig. 6 is an explanatory drawing of a game watching screen according to the embodiment.
[Fig. 7]

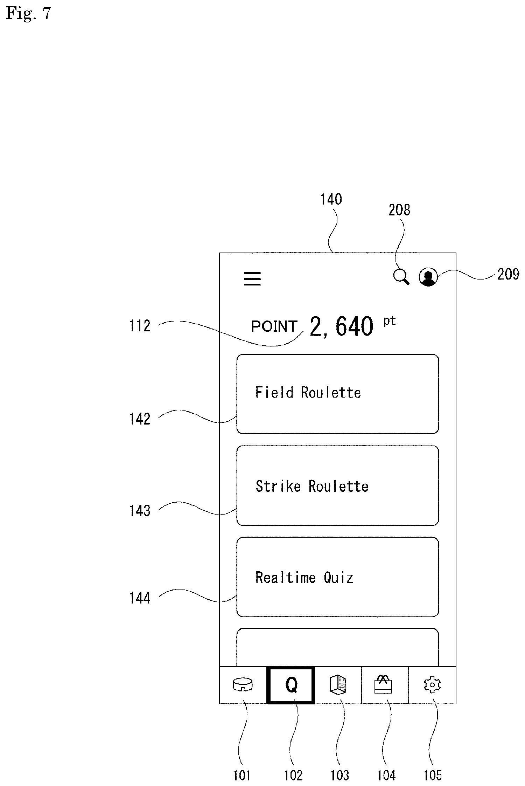

   Fig. 7 is an explanatory drawing of a quiz screen according to the embodiment.
[Fig. 8]

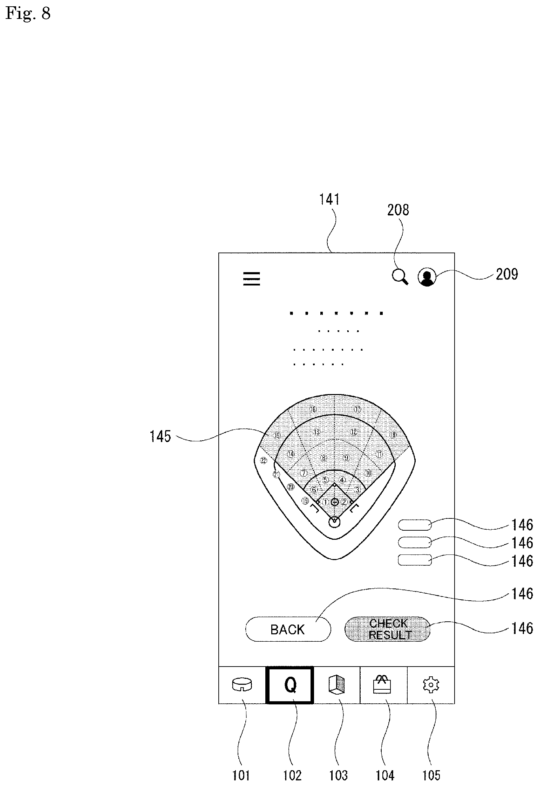

   Fig. 8 is an explanatory drawing of a quiz content screen according to the embodiment.
[Fig. 9]

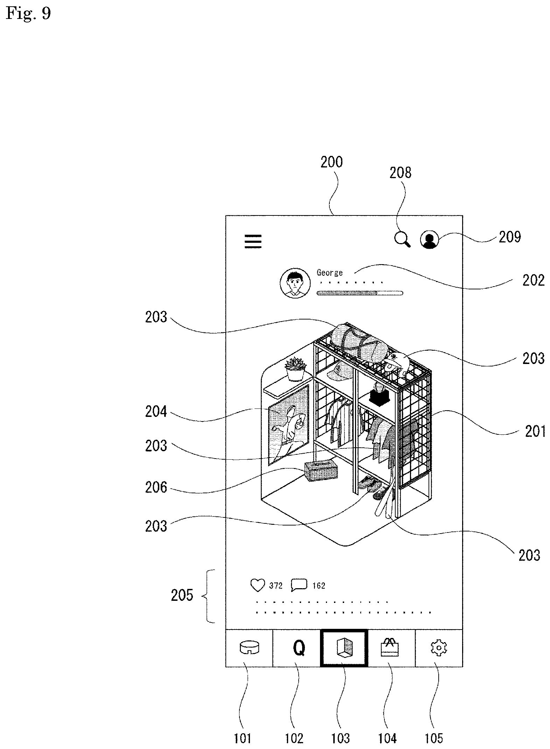

   Fig. 9 is an explanatory drawing of a locker room screen according to the embodiment.
[Fig. 10]

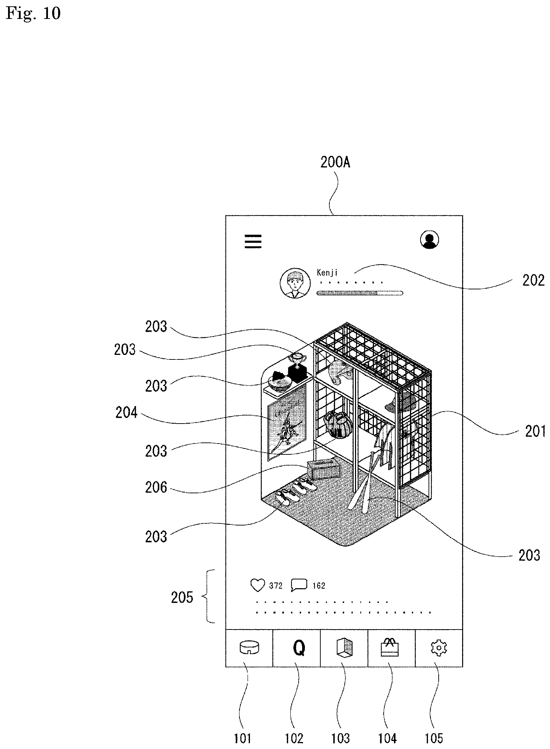

   Fig. 10 is an explanatory drawing of another locker room screen according to the embodiment.
[Fig. 11]

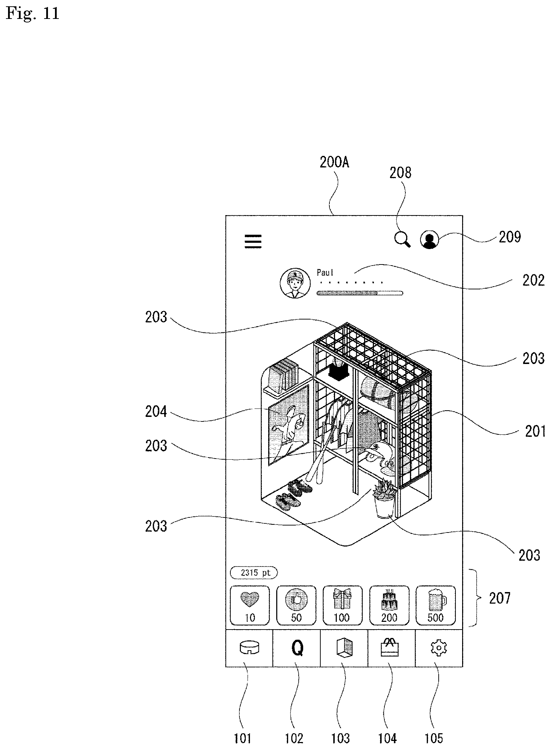

   Fig. 11 is an explanatory drawing of a locker room screen for a player according to the embodiment.
[Fig. 12]

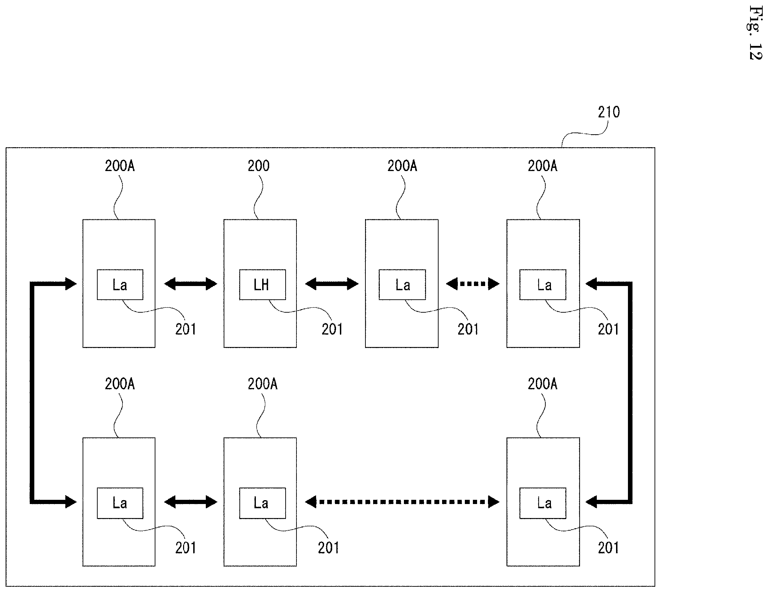

   Fig. 12 is an explanatory drawing of a virtual club house in which the lockers of the embodiment are located.
[Fig. 13]

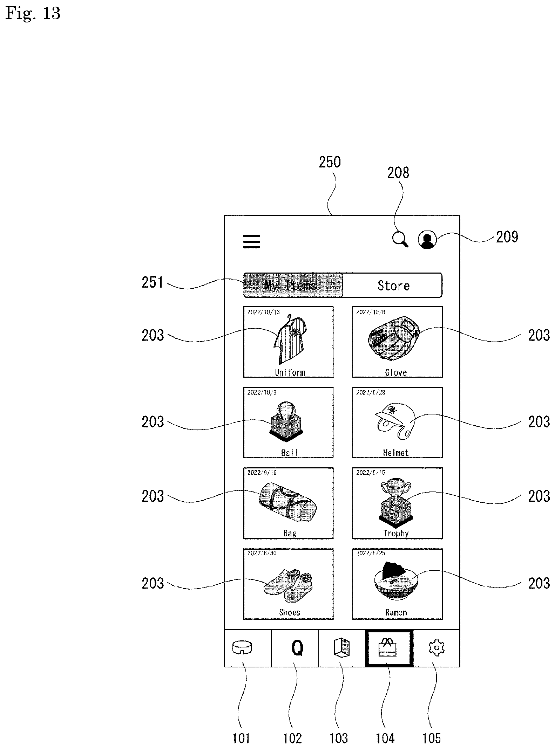

   Fig. 13 is an explanatory drawing of an item screen according to the embodiment.
[Fig. 14]

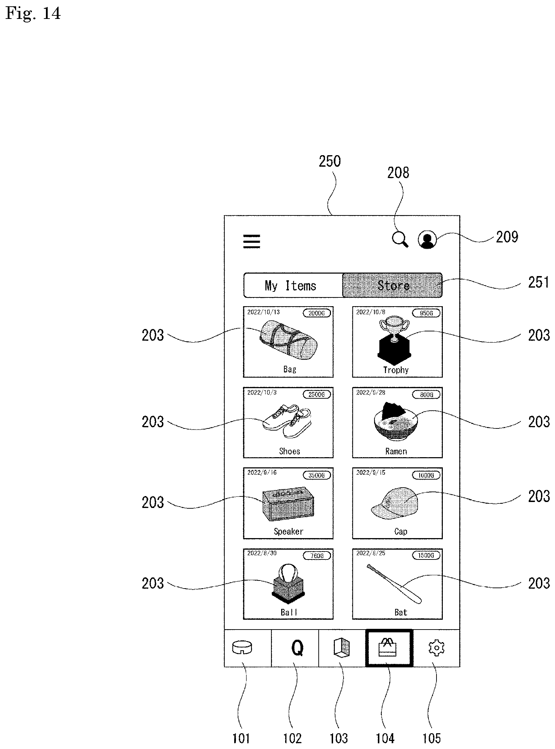

   Fig. 14 is an explanatory drawing of an item screen according to the embodiment.
[Fig. 15]

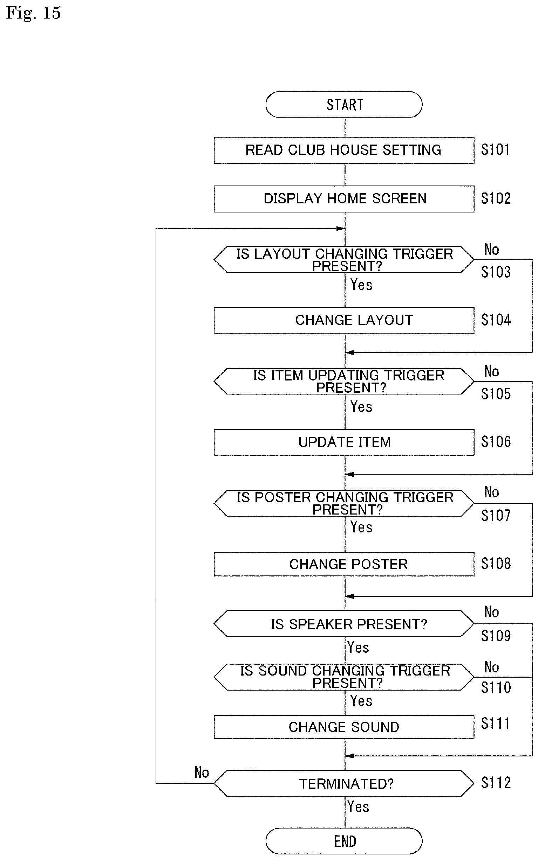

   Fig. 15 is a flowchart of a processing example according to the embodiment.
[Fig. 16]

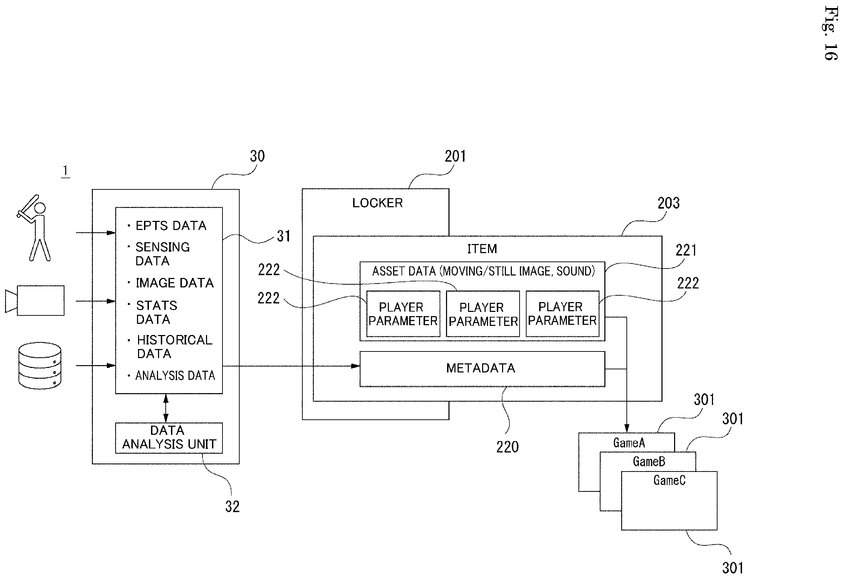

   Fig. 16 is an explanatory drawing of a linked game according to the embodiment.

### [Description of Embodiments]

An embodiment will be described below in the following order.
<1. System configuration>
<2. Screen and content example of game linked service>
<3. Processing examples>
<4. Linked game>
<5. Conclusion and modification example>

In the present disclosure, "image" refers to both of a moving image and a still image. For example, it is assumed that an imaging device 10 in Fig. 1 mainly captures a moving image, but an image displayed on, for example, a terminal device 5 can be either a moving image or a still image. Although "image" refers to an image actually displayed on a screen, "image" in signal processing or a transmission line before being displayed on the screen refers to image data.

### <1. System configuration>

Fig. 1 illustrates the overview of an information provision system 1 according to an embodiment.

The information provision system 1 of Fig. 1 includes the imaging devices 10, a main server 2, a score data server 3, a sensor 4, and the terminal devices 5. These devices and servers are connected to one another via wire or radio communications or network communications.

The information provision system 1 is a system that implements service for providing users having the terminal devices 5 with virtual spaces and digital items in relation to games (hereinafter, referred to as "game linked service"). In this game linked service, it is assumed that users are the supporters of teams or players. For example, when such users watch a game, the terminal devices 5 are provided with virtual spaces and digital items that are generated or updated depending on the game or the game or the users.

This allows the users to enjoy the game linked service as well as watching of the game.

The multiple imaging devices 10 in the information provision system 1 capture images of a subject area, e.g., a game scene in a stadium such as a baseball park from various positions. The service can be implemented with at least one imaging device 10, though the multiple imaging devices 10 are illustrated.

For example, the imaging device 10 is used to capture images for analyzing the motions of pitchers, fielders, batters, and a runner and for determining the trajectory, type, velocity, and rotation or the like of a ball.

The information provision system 1 is configured to extract skeletal capture data of player subjects from images captured by the imaging devices 10 and determine the motion of a player, for example, a pitching motion, a batting motion, and a running motion on the basis of the skeletal capture data. In some cases, the motions of sports items such as a ball or a bat are determined in addition to the motions of players.

In recent years, for plays in sports such as soccer and basketball, techniques are known to estimate, as EPTS (Electronic Performance and Tracking Systems), the posture and position of a player or referee and the position/rotation of a ball from a specified field on the basis of images captured by dedicated cameras or information obtained by sensors (acceleration sensor or GPS sensor) attached to persons (players) or objects (ball) in games.

Specifically, the imaging device 10 captures an image for obtaining such EPTS data, as skeletal capture data.

Furthermore, an image captured by the imaging device 10 can also be used as a photographed image of a game or the like.

The EPTS data generated on the basis of images captured by the imaging devices 10 is transmitted to the main server 2. For example, in the case of an information processing device (not illustrated) that records images captured by the multiple imaging devices 10 in a stadium such as a baseball park and generates EPTS data, the EPTS data generated by the information processing device is transmitted to the main server 2.

Alternatively, images captured by the imaging devices 10 may be transmitted to the main server 2 to generate EPTS data in the main server 2.

The sensor 4 is a sensor that detects the motions of a player and a ball or the like. Specifically, the sensor 4 is assumed to be a sensor attached to a player or a ball, for example, an acceleration sensor, a gyroscope sensor, a GPS (Global Positioning System) sensor, an altitude sensor, or a shock sensor. For example, the sensor 4 may be a wearable sensor on the uniform or body of a player or a sensor mounted in a ball. Alternatively, the sensor 4 may be a radar or the like.

Information about the motions of players can also be obtained from sensing data SS through the sensor 4. Alternatively, the sensing data SS can be used accessorily when skeletal capture data is obtained from images or when a posture or the like is estimated. Furthermore, the sensing data SS obtained by the sensor 4 can also be used for the velocity, the number of revolutions, and trajectory of a ball or the swing speed and trajectory of a bat.

The sensing data SS may be transmitted to the main server 2 or an information processing device, which is not illustrated, to generate EPTS data in a stadium such as a baseball park.

The score data server 3 is, for example, an information processing device for an organization that generates and distributes baseball score data SD. In this case, the score data server 3 is a server device that can transmit the score data SD of a game to the main server 2.

The score data server 3 may transmit the score data SD sequentially to the main server 2 during a game or collectively transmit the score data SD, for example, after the game.

In the case of baseball, the score data SD includes various kinds of game information as follows:
For example, in addition to information about the overall game, e.g., information including a score in each inning of the game and participating players, the score data includes information about each pitch of a pitcher. For example, the score data includes, for each pitch, a pitching time, a pitcher's name, a batter's name, a left-handed/right-handed batter, the presence or absence of a runner at first/second/third base, a runner's name, a strike/ball count, a ball/strike, an out count, a batting result (hit, swing and miss, strike not swung at, foul, ground out, fly out, or foul fly), a pitch speed, a pitch type, the number of revolutions, a rotation axis, a course, and other kinds of information.

The terminal device 5 is, for example, an information processing device such as a smartphone, a tablet, or a personal computer. As described above, it is assumed that the terminal device 5 is a device possessed by an ordinary user. In addition, on a display part 5a of the terminal device 5, an image including a virtual space like a locker room screen 200, which will be described later, and digital items is presented by the game linked service.

The main server 2 performs various types of processing for presenting information at the terminal devices 5 as the game linked service. For example, processing is performed to determine a state of a game or a player on the basis of skeletal capture data of a subject generated from an image captured by the imaging device 10 and provide digital items and a virtual space image to the terminal device 5 according to the state.

It can be assumed that the main server 2 is an information processing device for performing cloud computing, that is, a cloud server.

However, an information processing device other than a cloud server may perform processing for displaying an image of the game linked service at the terminal device 5. For example, it can be assumed that an information processing device such as a personal computer installed at a game venue has the function of the main server 2 and performs processing for acquiring skeletal capture data and generating an image to be provided. Furthermore, it can be assumed that the terminal device 5 has the function of the main server 2 and performs processing for acquiring skeletal capture data and generating an image.

Fig. 2 shows the configuration of the main server 2 and an example of input and output for the main server 2 in the information provision system 1 in Fig. 1 above.

Furthermore, a part for supplying data to the main server 2 is denoted as a data server 30.

The data server 30 in Fig. 2 is shown as a conceptual configuration, which is a general configuration of an information source that allows the main server 2 to provide the game linked service. For example, the data server 30 collectively refers to the imaging devices 10, the score data server 3, the sensor 4, a recording unit 11, and an EPTS data generation unit 12.

The imaging devices 10 and the sensor 4 are located in, for example, a stadium and on players or sports items as in Fig. 1. The installation location of the score data server 3 is not limited.

One or both of the recording unit 11 and the EPTS data generation unit 12 may be implemented by the information processing device located in a stadium or may be provided in the main server 2.

The imaging device 10 is configured as a digital camera device including an imaging element such as a CCD (Charge Coupled Devices) sensor or a CMOS (Complementary Metal-Oxide-Semiconductor) sensor, and obtains a captured image as digital data. In the present example, the imaging device 10 obtains a captured image as a moving image.

Each of the imaging devices 10 is located at a predetermined position to capture an image of, for example, a pitcher, a fielder, a batter, or a runner in a baseball park. The number of imaging devices 10 is not particularly specified if at least one of the imaging devices 10 is provided. However, it is preferable to provide the maximum number of imaging devices 10 to generate EPTS data with high accuracy.

The imaging devices 10 capture images as moving images in synchronization with one another and output the captured images.

The recording unit 11 records the images (image data VD) captured by the imaging devices 10 and supplies the captured images to the EPTS data generation unit 12.

The EPTS data generation unit 12 performs analysis processing on one or more captured images, generates EPTS data for each of the images, and integrates the EPTS data of all the images to generate the overall EPTS data. The EPTS data includes, for example, information about the positions of players (pitcher, fielder, batter, runner) and a ball at each frame timing, skeletal capture data of players, the posture of a player according to the data, and the number of revolutions and rotation direction of the ball.

Moreover, the EPTS data generation unit 12 may generate EPTS data by using the sensing data SS obtained by the sensor 4, in addition to captured images. For example, information from an acceleration sensor built in a ball or a GPS sensor attached to a player's uniform may be used.

For example, for each pitch of a pitcher in a game, the EPTS data generation unit 12 can generate information that allows a determination of a pitching motion, the speed and trajectory of a ball, a batter's behavior in response to a pitch, a batting result, a running result, and the speed and trajectory of a batting tool as the EPTS data of the overall game.

Thus, the EPTS data is an example of behavior information about a person (e.g., a pitcher, a batter, or a runner) or a sport item (e.g., a ball or a bat) in relation to the game.

The EPTS data generation unit 12 can generate EPTS data from multiple images captured by the multiple imaging devices 10 and generate EPTS data from multiple images captured by the single imaging device 10. Furthermore, the EPTS data generation unit 12 can generate EPTS data from multiple images and the sensing data SS of one or more sensors and generate EPTS data from a captured image and the sensing data SS of a single sensor.

The EPTS data (skeletal capture data) generated by the EPTS data generation unit 12 is transmitted to the main server 2.

The image data VD captured by the imaging devices 10 is also transmitted to the main server 2 via, for example, the EPTS data generation unit 12.

Alternatively, the sensing data SS may be transmitted to the main server 2 and used as it is for the processing of the main server 2.

The EPTS data generation unit 12 may be provided in the main server 2. In this case, for example, it is only necessary to transmit images (image data VD) captured by the imaging devices 10 and the sensing data SS of the sensor 4 to the EPTS data generation unit 12 in the main server 2 through network communications or the like.

Moreover, as illustrated in Fig. 1, the score data SD is sequentially transmitted to the main server 2 from the score data server 3.

The main server 2 is composed of an information processing device such as a computer device, has functions as an arithmetic unit 21 including a microprocessor and a presentation control unit 22, and has a storage 23 including a storage medium accessible to the microprocessor or the like.

The arithmetic unit 21 acquires information from the data server 30 and performs various kinds of processing for performing game linked service using the acquired information, for example, data acquisition, game analysis, and the generation of a virtual space image, digital items, and contents. The processing function of the arithmetic unit 21 will be described later with reference to Fig. 3.

The storage 23 indicates a storage medium in the main server 2 and stores information including the received image data VD, skeletal capture data BD, and the score data SD and various types of data generated by the arithmetic unit 21. The storage 23 may be an internal storage medium of the main server 2 or a storage medium separated from the information processing device constituting the main server 2.

The presentation control unit 22 performs control to display various images generated by the processing of the arithmetic unit 21, in a predetermined format on the terminal device 5. Specifically, the presentation control unit 22 performs processing to display images of a virtual space and digital items, which are generated by the arithmetic unit 21 during game linked service, in a display part 5a of the terminal device 5.

The arithmetic unit 21, the presentation control unit 22, and the storage 23 may be provided in a single information processing device or may be provided separately in multiple information processing devices. Moreover, the storage 23 may be implemented by storage media in various forms.

An image of game linked service provided by the processing of the main server 2 or data for generating an image is transmitted to the terminal device 5 and is displayed in the display part 5a. This allows the user of the terminal device 5 to visually confirm an image provided by the game linked service.

Furthermore, information about user interaction during the provision of game linked service may be input from the terminal device 5 to the arithmetic unit 21.

Fig. 3 shows information transmitted from the data server 30 to the arithmetic unit 21 and the processing functions of the arithmetic unit 21. In particular, Fig. 3 shows a processing function for a game linked service function 40 and a processing function as shared service that can exhibit resultant items obtained by the game linked service.

The arithmetic unit 21 of the present embodiment has at least the game linked service function 40. The arithmetic unit 21 of the main server 2 may have a shared service function 50. The shared service function 50 may be provided for another server device.

Information provided to the arithmetic unit 21 by the data server 30 includes, as shown in Fig. 3, the EPTS data, the sensing data SS, the image data VD, stats data, historical data, and analysis data.

The stats data and the historical data refer to the score data SD provided by the score data server 3.

For example, stats data is performance information about players and teams. Examples of stats data on baseball pitchers include team names, leagues to which pitchers belong, the number of wins, the number of defeats, earned run averages, the number of pitching appearances, the number of complete games, the number of shutouts, the number of saves, the number of save opportunities, innings pitched, the number of runs, the number of earned runs, the number of home runs allowed, the number of hits by pitch, the number of bases on balls, the number of intentional walks/intentional bases on balls, the number of strikeouts, the number of hits allowed, the number of walks plus hits per inning pitched (WHIP), and the ratio of grounders/fly outs.

In addition to the past performance of teams and players, the stats data also includes information about the performance of a team and players up to the current point in an ongoing game, that is, information about the detailed progress of the game, information about registered players, information about starting members, and information about substitute players.

The historical data is also performance information about teams and players and is included in the stats data in a broad sense. For the purpose of explanation, the historical data is indicated as past best records, team records, and individual records. For examples, the historical data includes information about records that may be achieved in the current game. For example, a strikeout record in a past game, a straight-hits record, a consecutive-games record, and a team-hits record in a game are included. The historical data serves as reference information for editing special digital items in the game linked service.

The analysis data indicates data determined by the function of a data analysis unit 32 for the EPTS data, the sensing data SS, and the image data VD.

The function of the data analysis unit 32 may be provided in the main server 2 or may be implemented by another information processing device.

Specifically, the analysis data is assumed to be, for example, specific movements of players and ball trajectories as determined from the EPTS data and the sensing data SS or the like.

The EPTS data, the sensing data SS, the image data VD, the stats data, the historical data, and the analysis data that are supplied from the data server 30 to the arithmetic unit 21 are information about games and thus will be referred to as game information.

The game information indicating information about games and information about players and teams in games is distinguished from user information, which will be described later, in terms of contents.

The information about games includes the date and time of a game, a venue, a weather, a score, and information about the progress of a game (the current inning, the out count).

The information about players includes information about individual players, for example, the game records, past records, game images, play contents, and movements of players.

The information about a team includes information about the overall team, for example, the game records, past records, game images, participating players, and substitute players of the team.

However, the EPTS data, the sensing data SS, the image data VD, the stats data, the historical data, and the analysis data that serve as "game information" do not all need to be transmitted to the arithmetic unit 21. For example, the transmission of at least one of these items of data to the arithmetic unit 21 allows the arithmetic unit 21 to perform processing for the game linked service function 40.

Furthermore, information to be input from the terminal device 5 to the arithmetic unit 21 includes user information and information about purchase/exhibition/share/exchange.

The game information and the user information will be described below.

"Game information" in the present disclosure has two information sources as follows:
· Information provided from the score data server 3
· Information obtained from signals from the imaging device 10 and the sensor 4 Information obtained from the two information sources may have different contents or the same contents.

In terms of the content type of the game information, the game information is classified into "game fixed information" and "game progress information."

The game fixed information is assumed to be information unchanging in the progress of a game.

The game fixed information includes, for example, sites, the start dates and times of games, seasons, teams, starting members, weather information such as a weather and a temperature at the start of a game, team records before a game, players on the bench, player and team records before a game (stats data, historical data), umpires, game categories (such as a regular game, a championship game, and a game with a magic number to win the championship), player's conditions before a game, and player's profiles (such as birthdays and hometowns).

The game progress information is assumed to be information obtained in the progress of a game.

The game progress information includes, for example, game scores (game progress/result), an ongoing inning/time/half, a climatic change in a game, player and team records in the progress of a game (stats data, historical data), participating players, player's actions (EPTS information/sensing data SS/analysis data), the image data VD of games, and achieved records.

The user information refers to information that can be obtained for a target user (a user logging in the game linked service function 40) by the main server 2.

In terms of the content type of the user information, the user information is classified into "user fixed information" and "user reaction information."

The user fixed information is assumed to be user information unchanging in the current game (a game watched by the user logging in the function).

For example, the user fixed information includes user account information, address information, attribute information, history information about the game linked service, and information about owned items. The attribute information may include basic information including ages, sexes, places of residence, and email addresses and information indicating supported teams and players in relation to the game linked service.

Furthermore, the date and time of a game at a stadium, the stadium name, and seat information may be added in succession to the user fixed information.

In addition, the user fixed information may be partially or entirely input in advance for, for example, users registered in the game linked service function 40 and may be stored in the storage 23 or the like.

The user reaction information is assumed to be information corresponding to user actions and interactions for the current game and the game linked service.

The user reaction information includes, for example, answer entries for quizzes provided by the game linked service, information about user entries of supported teams and players in the current game, information entered by users during a game (e.g., operation information about a quiz, which will be described later, participation information, and answer information), information about the watching spot, current position, or seat position of a user, and cheering information about users (or all spectators).

In addition, information about user actions and interactions may be added sequentially as history information to the user fixed information.

For the processing of the game linked service function 40, the arithmetic unit 21 receives the game information (game fixed information, game progress information) and the user information (user fixed information, user reaction information).

As processing functions for executing the game linked service function 40 in the arithmetic unit 21, a game information acquisition unit 41, a user information acquisition unit 42, a game analysis unit 43, a quiz generation unit 44, an item/content generation unit 45, a storage control unit 46, a locker processing unit 47, and a linked game processing unit 48 are shown. The arithmetic unit 21 does not need to have all the processing functions.

The game information acquisition unit 41 is the function of acquiring the game information (game fixed information, game progress information). For example, before the start of a game or during the game, processing is performed to sequentially acquire the game information from the data server 30.

The user information acquisition unit 42 is the function of acquiring the user information (user fixed information, user reaction information). For example, before the start of a game or during the game, user information is sequentially acquired for a logged-in user. At the time of login, processing is also performed to read user fixed information about the user, the user fixed information being stored in the storage 23.

The game analysis unit 43 performs processing for analyzing the game on the basis of the game information and the user information and determining the state of the game. Moreover, according to the determination of the state of the game, the game analysis unit 43 performs processing for determining the timing for requiring user response for service or determining the timing for editing digital items.

The quiz generation unit 44 performs processing for generating a quiz or questionnaire to be provided to the user and transmitting the quiz or questionnaire to the terminal device 5. The quiz generation unit 44 can also perform processing for requiring user interaction in addition to a quiz or questionnaire.

The item/content generation unit 45 generates an item 100, which will be described later, as a digital item. Furthermore, the item/content generation unit 45 performs processing for generating image contents such as a game digest video, a free viewpoint image, and a CG (computer graphics) image. The item/content generation unit 45 also performs processing for generating information to be finally associated with the digital item. Moreover, the item/content generation unit 45 performs processing for generating and assigning a point, which will be described later.

For the game linked service function 40, the storage control unit 46 performs processing for storing and reading information in the storage 23.

The locker processing unit 47 is the function of performing processing for providing a club house as a virtual space including a virtual locker image (locker room screen 200) of an ordinary user or a player. Processing is performed to change the setting or form of a locker provided for a user as the locker room screen 200.

The linked game processing unit 48 is the function of performing processing for a game provided on the screen of the terminal device 5. The game is, for example, a game provided by an application program or a browser screen. The variety of game contents is wide.

However, the game has the function of making a change according to actual game information or user information.

For example, parameters or game items in the game are changed according to the game information or user information and digital items for the locker room screen 200.

The arithmetic unit 21 of the main server 2 also indicates the shared service function 50 in addition to the game linked service function 40.

The shared service function 50 may include a function as an NFT (Non-Fungible Token) market.

The NFT market function is service that allows the user to exhibit and sell an acquired NFT work or purchase an exhibited NFT work.

For example, in the case of the present embodiment, a digital item (item 100) generated by the game linked service function 40 is edited finally into a user-specific digital item by the progress of the game and user interaction. The digital item is allowed to be exhibited or purchased as an NFT work in the shared service function 50.

Thus, as the shared service function 50, a smart contract function 51 and a payment function 52 are provided.

The smart contract function 51 is the function of automatically performing predetermined purchase and sale processing for dealing according to predetermined conditions.

The payment function 52 is the function of performing payment processing for purchase and sale.

As the shared service function 50, a share service function 53 and an exchange service function 54 may be provided.

The share service function 53 is the function of sharing, for example, free items and contents of the user with others.

The exchange service function 54 is the function of exchanging, for example, items and contents of the user with items and contents of others.

For the shared service function 50, the game linked service function 40 exhibits some digital items to allow the user to purchase the items.

Moreover, the game linked service function 40 allows the user to exhibit a digital item acquired by the user, purchase a digital item exhibited by another person, share a digital item with others, and exchange a digital item with a digital item of another person.

The functional configuration of Fig. 3 is an exemplary configuration.

Some of the functions serving as the game linked service function 40 may be processed in the terminal device 5.

For example, some or all of the functions of the quiz generation unit 44, the game analysis unit 43, the item/content generation unit 45, and the linked game processing unit 48 may be performed outside the game linked service function 40. The arithmetic unit 21 may be configured to perform the processing of the locker processing unit 47 on the basis of at least the game information.

Furthermore, the shared service function 50 may be omitted. For example, the game linked service function 40 may perform processing for selling a generated digital item to the user.

The configuration of an information processing device 70 used in the information provision system 1 illustrated in Figs. 1, 2, and 3 will be described below. For example, the main server 2, the terminal device 5, and the EPTS data generation unit 12 in Fig. 2 can be implemented by the information processing device 70 in Fig. 4.

Furthermore, the information processing device 70 can be configured as, for example, a dedicated workstation, a general-purpose personal computer, or a mobile terminal device.

A CPU 71 of the information processing device 70 in Fig. 4 performs various kinds of processing according to a program stored in a ROM 72 or a nonvolatile memory unit 74, e.g., an EEP-ROM (Electrically Erasable Programmable Read-Only Memory) or a program loaded from a storage unit 79 to a RAM 73. The RAM 73 also appropriately stores data or the like necessary for the CPU 71 to execute various types of processing.

An image processing unit 85 is configured as a processor for performing various types of image processing. The processor can perform any one of, for example, image generation processing of a clip or the like, image analysis processing on a captured image or the like, processing for generating an animation image or a CG image, DB (Data Base) processing, image effect processing, and EPTS data generation processing.

The image processing unit 85 can be implemented by, for example, a CPU separated from the CPU 71, a GPU (Graphics Processing Unit), GPGPUs (General-purpose computing on graphics processing units), or an AI (artificial intelligence) processor or the like.

Moreover, the image processing unit 85 may be provided as a function in the CPU 71.

The CPU 71, the ROM 72, the RAM 73, the nonvolatile memory unit 74, and the image processing unit 85 are connected to one another via a bus 83. An input/output interface 75 is also connected to the bus 83.

An input unit 76 composed of an operator or an operating device is connected to the input/output interface 75. For example, as the input unit 76, various operators or operating devices such as a keyboard, a mouse, a key, a dial, a touch panel, a touch pad, and a remote controller are assumed.

The input unit 76 detects a user operation, and the CPU 71 analyzes a signal corresponding to an input operation.

A display unit 77 including an LCD (Liquid Crystal Display) or an organic EL (Electro-Luminescence) panel or the like and a sound output unit 78 including a speaker or the like are connected integrally or separately to the input/output interface 75.

The display unit 77 provides various types of display as a user interface. The display unit 77 includes, for example, a display device provided in the housing of the information processing device 70 or a separate display device connected to the information processing device 70.

The display unit 77 displays various images on the display screen on the basis of instructions from the CPU 71. The display unit 77 also displays various operation menus, icons, and messages, that is, a GUI (Graphical User Interface) on the basis of instructions from the CPU 71.

For example, assuming that the information processing device 70 serves as the terminal device 5, the display unit 77 corresponds to the display part 5a and provides screen display using the game linked service function 40 for a screen or the like including the item 100, which will be described later.

The storage unit 79 including an SSD (Solid State Drive) or an HDD (Hard Disk Drive) and a communication unit 80 including a modem may be connected to the input/output interface 75.

For example, assuming that the information processing device 70 serves as the main server 2, the storage unit 79 can be regarded as an example of the storage 23 in which information is stored by the storage control unit 46.

The communication unit 80 performs communication processing via a transmission line such as the Internet and communications such as wired/radio communication or bus communication with various devices.

A drive 82 is also connected to the input/output interface 75 as necessary, and a removable recording medium 81 such as a flash memory, a memory card, a magnetic disk, an optical disc, or a magneto-optical disc is mounted as appropriate.

The drive 82 enables reading of data files such as an image file and various computer programs or the like from the removable recording medium 81. The read data files are stored in the storage unit 79, and images and sounds included in the data files are output to the display unit 77 and the sound output unit 78. The computer programs or the like read from the removable recording medium 81 are installed in the storage unit 79 as necessary.

In the information processing device 70, software can be installed through network communication using the communication unit 80 or through the removable recording medium 81. Alternatively, the software may be stored in advance in the ROM 72 or the storage unit 79 or the like.

For example, assuming that the information processing device 70 serves as the main server 2, the functions as the arithmetic unit 21 and the presentation control unit 22 are provided by software, and processing is performed using the functions by the CPU 71 or the image processing unit 85.

A sensor unit 84 is represented as a part for outputting some type of sensing data SS, for example, an image sensor (camera), a gyroscope sensor, an acceleration sensor, or a position sensor. For example, when the information processing device 70 is implemented as the terminal device 5, the sensor unit 84 is provided to detect the action, behavior, and position or the like of the user.

### <2. Screen and content example of game linked service>

A screen example of the terminal device 5 implemented in the game linked service will be described below.

The game linked service is service for providing digital items and virtual spaces in relation to sports according to game information associated with the games of sports such as baseball.

Fig. 5 shows an example of some screens provided by the game linked service function 40. For example, the screens include the locker room screen 200, an item screen 250, a game watching screen 90, a quiz screen 140, a linked game screen 300, and a news screen 350. The user can watch the screens while making transitions between the screens as desired.

Fig. 6 shows the game watching screen 90 that is one of the provided screens. The game watching screen 90 is a screen for displaying the item 100, which is a digital item changing with, for example, the progress of a watched game.

The item 100 is, for example, a digital item associated with a sport. In baseball, the item 100 is designed like a ball, a bat, or a glove of baseball. For example, the digital item has a ball design with a team logo in this example.

Moreover, the game watching screen 90 displays game information and user information along with the item 100. In this example, team/score information 110 and point information 111 are displayed.

The team/score information 110 displays an opponent team with a team logo and a mascot mark and the score of the current game.

The point information 111 indicates the point of a user, that is, a user who has logged into the game linked service to watch the screen provided on the terminal device 5.

For example, the point information 111 includes a current point 112, a ranking 113, an active point 114, a quiz point 115, and a player point 116.

In the game linked service, the user is assigned with a point according to a game condition or a user condition.

The point information 111 indicates a point acquired for a target game by the user, the current point 112 indicates a point currently acquired by the user in the current game, and the ranking 113 indicates the rank of the point among all logged-in users. The ranking 113 may include the rankings of users logged out at present.

The active point 114, the quiz point 115, and the player point 116 are shown as the details of the current point 112.

The active point 114 is, for example, a point assigned according to the entry or action of the user.

The quiz point 115 is a point assigned according to the answer of the user to a quiz.

The player point 116 is a point assigned according to, for example, the record of a player selected by the user.

In the game watching screen 90 or other screens, which will be described later, a stadium icon 101, a quiz icon 102, a home icon 103, an item icon 104, and a setting icon 105 are displayed as selectable items.

The stadium icon 101 is an icon for an operation of transition to the game watching screen 90. The quiz icon 102 is an icon for an operation of transition to the quiz screen 140, which will be described later. The home icon 103 is an icon for an operation of transition to the locker room screen 200 provided for the user as a home screen. The item icon 104 is an icon for an operation of transition to the item screen 250. The setting icon 105 is an icon for an operation of transition to a setting screen, which is not illustrated.

These icons are provided for presenting the current screen. As shown in Fig. 5, in the game watching screen 90, the stadium icon 101 is displayed in a different format from other icons. For example, in Fig. 6, the frame of the stadium icon 101 is thick and highlighted as compared with the frames of other icons.

As shown in Fig. 6, the item 100 is displayed as main contents in the game watching screen 90. The main server 2 performs processing for changing the item 100 to be displayed on the terminal device 5, according to the game information or according to the game information and the user information. In other words, the item 100 is edited by the function of the item/content generation unit 45 of Fig. 3.

For example, at the starting time of a game, the item 100 is displayed as a blank ball in the game watching screen 90.

Thereafter, the image of the item 100 is changed such that the team logo is added to the blank ball, the color of the ball is partially changed, or a portrait of a player is added.

In other words, the item 100 displayed as a blank ball at the start of a game is edited according to, for example, the game progress information or the user reaction information, so that the item 100 is completed with a final design at the end of the game.

The main server 2 edits the item 100 according to the progress of the game and a user's action, so that the user can be provided with the unique item 100 generated for each game and each user.

The main server 2 can provide the completed item 100 as a free or paid user-specific digital item to the user. For example, the item can be added as a user's NFT work to the collection of the user.

The item 100 in the game watching screen 90 may be a still image, a moving image, or an image with a predetermined movement. For example, when the item 100 is a ball, the item may be an image of the rotating ball.

In addition, a movement such as rotation may be additionally displayed in response to a user operation on the item 100.

Fig. 7 shows the quiz screen 140.

In the quiz screen 140, for example, a field roulette button 142 for selecting a quiz type, a strike roulette button 143, and a real-time quiz button 144 are provided along with the current point 112.

The field roulette button 142 is a button that allows the user to participate in, for example, a field roulette quiz before a game.

For example, when the field roulette button 142 is operated, a transition is made to a quiz content screen 141 shown in Fig. 8. In the quiz content screen 141, a field roulette 145 and various operation buttons 146 are displayed.

The user selects any player and makes an entry for a quiz by selecting, from areas indicated by the field roulette 145, an area to be struck by a ball hit by the player.

For example, if the ball of the selected player flies to the selected area in an actual game, the answer of the user to the quiz is correct.

The strike roulette button 143 is a button for introduction to a quiz in which, for example, the course of a pitch of a pitcher is selected. For example, in the quiz, the user selects a pitcher and predicts the pitching course of the third strike when the pitcher strikes out a batter.

The screen of the strike roulette displays, for example, an image of areas of a strike zone and the surrounding area. The user can select any course to make an entry for the quiz.

The real-time quiz button 144 is a button for introduction to, for example, quizzes sequentially generated during a game.

When a quiz is generated during a game, the user can make a transition to the answer screen of the quiz by operating the real-time quiz button 144.

When participating in such quizzes or answering the quizzes correctly, the user is assigned with points, the item 100 of the game watching screen 90 is edited, or the locker room screen 200 is changed.

Fig. 9 shows the locker room screen 200.

The locker room screen 200 is prepared as a user's website for, for example, each user subscribing to the game linked service.

For example, the locker room screen 200 of Fig. 9 is a screen provided for the user displayed as a user name 202 and serves as a website for user login to the game linked service.

The locker room screen 200 displays a virtual locker 201.

For example, the locker 201 is set in a basic shape but is displayed in various modes for each user.

Various items 203 can be placed on, for example, a shelf and the floor in the locker 201. It is assumed that the items 203 can be optionally selected by the user from the items 203 owned by the user and can be placed at any locations.

The items 203 include items used for baseball, for example, bats, helmets, caps, spiked shoes, and uniforms. The items 203 also include items irrelevant to baseball, for example, ordinary clothes, garden plants, small articles, and food products. In addition, items may be prepared for the supporters of teams and players, for example, player's figures, the logo goods of team characters, team mascot dolls, and medals. The game linked service provides each user with the free or paid items 203 as various virtual items.

The user can purchase the items 203 at, for example, a virtual shop, obtain the items 203 as prizes or the like for correct answers to quizzes, or exchange the items with others. The items 203 obtained thus can be located in the own locker 201.

The user may customize, for example, the color of the locker 201 or the layout of the shelf.

Moreover, a poster 204 is attached in the locker 201. The poster 204 acts as the display part of various images. For example, a still image or a moving image of a favorite player of the user or a still image or a moving image posted by the user is displayed as the poster 204.

Moreover, a virtual speaker 206 can be located in the locker 201.

For example, the user can obtain the speaker 206, which is prepared as one of the items 203, by purchase from the item screen 250 or presentation corresponding to the quiz result, the point ranking, or the game result.

The speaker 206 obtained by the user is placed in the locker 201, so that sound is output in the viewing of the locker room screen 200.

For example, when the user places the speaker 206 in the locker 201, the user can play back and output sound and music through the terminal device 5 when viewing the locker room screen 200.

For example, the theme song of a player is played back. Furthermore, during a live report of another user in a game, the report and commentary of the user can be heard.

The locker room screen 200 also displays user information 205. For example, a like icon for the user, the number of likes, a comment icon, the number of comments, and a user profile are displayed.

In this way, the locker room screen 200 unique to each user is formed and located in the virtual club house.

Thus, the multiple virtual locker room screens 200 are formed by multiple users.

Each user having logged in the service can make a transition from the locker room screen 200 serving as the website of the user to, for example, a locker room screen 200A of another person as shown in Fig. 10. In other words, each user can edit the contents of the locker room screen 200 as desired and view the locker room screen 200A of another person.

In the locker room screen 200A of another person, the locker 201 is displayed with the user name 202 of the locker room screen 200A.

In the locker 201, the items 203 are placed and a locker color is selected by the user of the locker room screen 200A serving as the website of the user.

Furthermore, in the locker room screen 200A of another person, a like button, the number of likes, a comment button, the number of comments, and a user profile are displayed as the user information 205 about the user of the locker room screen 200A.

A user having viewed the locker room screen 200A of another person can enter a like through the like button and can also transmit a comment to the user of the locker room screen 200A through the comment button.

In the locker room screen 200 of each user, the items 203 are placed or the image of the poster 204 is set according to the favorite players and teams and the preferences of the user, so that the locker 201 can exhibit the preferences of the user. For example, ramen may be placed as the items 203 in the locker 201 to show that the user likes ramen.

Each user visits the locker room screens 200A of other users, thereby viewing a variety of lockers 201 of various users.

For example, the game linked service can also provide the locker room screen 200A of a player belonging to a baseball team as shown in Fig. 11. The presence of such a locker room screen 200A allows the user to view the locker 201 of a favorite player.

The user can also visit the locker room screen 200A of the player to communicate with the player using the comment function or the like.

Fig. 11 shows an example in which a gift area 207 is displayed.

In the gift area 207, a like icon and gift icons or the like are prepared, allowing the user to send a virtual gift or the like to the player, the owner of the locker room screen 200A.

For example, when a user performs an operation to send a gift, an image or animation of gift delivery is displayed when the player views the locker room screen 200, which is the website of the player. The image or animation of gift delivery is displayed for users who are viewing the locker room of the player when the operation to send the gift is performed. The animation of gift delivery may be an animation of a gift falling into the locker room of the player from above.

The gift area 207 is not limited to the locker room screen 200A of a player. The gift area 207 may be displayed in the locker room screen 200A of an ordinary user to send gifts between users.

Moreover, whether to display the gift area 207 for displaying gift items may be determined depending on the owner of the displayed locker room screen 200A. For example, in the locker room screen 200A of an ordinary user in Fig. 10, the gift area 207 is not displayed, whereas in the locker room screen 200A of the player in Fig. 11, the gift area 207 is displayed.

As shown in Figs. 9, 10, and 11, in the locker room screens 200 and 200A and other screens, a search icon 208 and an account icon 209 are displayed on the screen.

The search icon 208 displays, for example, filter items as a pull-down menu, enabling the setting of extraction conditions for the user. For example, filter icons such as "#close ranking," "Ramen," "#player," and "Gifu prefecture" can be selected. According to the selection, a list of locker images of the corresponding users and players is displayed.

When "#close ranking" is selected, for example, a list of users at point rankings close to that of the user is displayed. When "#Ramen" is selected, a list of users and players who like Chinese soup noodles is displayed. When "#player" is selected, a list of players belonging to baseball teams is displayed. When "#Gifu prefecture" is selected, a list of users and players from Gifu prefecture is displayed.

By selecting a user or player on the displayed lists, the screen can be switched to the locker room screen 200A of the user or player.

Fig. 12 shows a state in which the locker room screens 200 and 200A including the lockers 201 are located in a club house 210 set as a virtual space.

The locker room screen 200 is the website of a logged-in user. The lockers 201 (other lockers La) of the locker room screens 200A of other persons or players are arranged on the left and right of the locker 201 (own locker LH) of the locker room screen 200. In other words, the multiple virtual lockers 201 are arranged to form the virtual club house 210.

The other lockers La are arranged laterally with respect to the own locker LH of the locker room screen 200 of the logged-in user. In this state of arrangement, the user can view the lockers 201.

For example, in response to a flick or a swipe from the right to the left on the locker room screen 200 by the user, the other locker La is displayed in the locker room screen 200A on the right. In response to another swipe from the right to the left, the other locker La is displayed in the locker room screen 200A on the right.

For example, when the lockers 201 are arranged in a circulating pattern as illustrated, a swipe from the right to left is continued to return to the own locker LH.

Also in the case of a flick and a swipe from the left to the right, the lockers 201 on the left side can be viewed in sequence.

The order of the arranged lockers 201 of users and players in the club house 210 is set for each logged-in user. In other words, a unique order is set for each user. The order can be changed by a user operation. For example, the locker 201 of a favorite player or the locker 201 of another user sharing common tastes is located next to the own locker 201, facilitating viewing of the lockers 201 of favorite persons. Moreover, the order of arrangement may be automatically changed as will be described later.

Figs. 13 and 14 show examples of the item screen 250.

The item screen 250 has a tab 251 that allows selection of "MY Items" as shown in Fig. 13 and "Store" as shown in Fig. 14.

When "MY Items" is selected in the tab 251 of Fig. 13, a list of the items 203 owned by the logged-in user is displayed. The user can select the items 203 displayed by the "MY Items" tab and place the items 203 in the lockers 201.

For example, when selecting the items 203 on the screen, the user is guided to a screen for specifying the positions of the items 203 in the locker 201, and the items are displayed in the locker 201 by user operations.

In the case of the "Store" tab in Fig. 14, a list of the items 203 that can be purchased by the logged-in user is displayed. In addition, the items are displayed with sales prices, e.g., "1000 G."

For example, when selecting the items 203 on the screen, the user is guided to the screen of a virtual shop in which transactions such as purchase and exchange can be made. The obtained items 203 are added to the list of the "MY Items" tab.

In the linked game screen 300 described in Fig. 5, a game screen provided by the linked game processing unit 48 is displayed. The user can enjoy games from the linked game screen 300.

On the news screen 350, for example, news feeds about baseball teams and players are displayed.

### <3. Processing examples>

Referring to Fig. 15, a processing example of the main server 2 for implementing the game linked service will be described below. The following processing indicates a processing example implemented by the game linked service function 40 of Fig. 3 in the arithmetic unit 21 of the main server 2. The processing particularly indicates processing for a format change of the locker room screen 200 by the locker processing unit 47.

The processing of the arithmetic unit 21 is performed by the CPU 71 when the information processing device 70 of Fig. 4 constitutes the main server 2. However, part of the processing may be performed by the terminal device 5. The processing is performed by the CPU 71 when the information processing device 70 of Fig. 4 constitutes the terminal device 5.

Fig. 15 shows processing after the terminal device 5 has logged into the game linked service. In step S101, the arithmetic unit 21 reads a club-house setting for the logged-in user. For example, for the logged-in user, layout information about the lockers 201 in the club house 210, the settings of the locker room screen 200, and owned items are confirmed as the club-house setting.

The layout information is the order of the other lockers La arranged with respect to the own locker LH.

The settings of the locker room screen 200 include the state of arrangement of the items 203 in the locker 201, the color and shelf position of the locker 201, and the image contents of the poster 204.

For example, the arithmetic unit 21 reads the club-house setting of the previous log-out of the user from the storage 23.

For the reading, the arithmetic unit 21 stores, in the storage, the setting of the locker room screen 200 for each user, the layout information in the club house 210, and information including the owned items 203 and manages the setting and the information.

In step S102, the arithmetic unit 21 controls the display of the locker room screen 200 serving as the website of the logged-in user. Specifically, in step S102, the arithmetic unit 21 transmits information about the locker room screen 200 to the terminal device 5 to display the locker room screen 200. Thus, the user can view the locker room screen 200 of the user as in Fig. 9 through the terminal device 5.

The user can make a transition to each screen through an operation, which is not shown in Fig. 15.

For example, a swipe to the left or right from the locker room screen 200 can make a transition to the locker room screen 200A of another person.

By operating the stadium icon 101, the quiz icon 102, the item icon 104, or the setting icon 105, a transition can be made to the game watching screen 90, the quiz screen 140, the item screen 250, or a setting screen, which is not illustrated. Moreover, the user can return the display to the locker room screen 200 of the user by operating the home icon 103.

When the user views the locker room screen 200 or other screens, the arithmetic unit 21 performs processing for changing the format of the locker room screen 200, for example, the display format or the sound output format in response to a predetermined trigger, as steps S103 to S111.

The arithmetic unit 21 repeatedly monitors a layout changing trigger in step S103, an item updating trigger in step S105, a poster changing trigger in step S107, and steps S109 and S110 until it is determined that the monitoring is to be terminated in step S112.

The arithmetic unit 21 determines the termination in step S112, for example, when the user logs out from the game linked service, when the application of the game linked service is terminated or browsing is terminated, or when the terminal device 5 is powered off.

In steps S103, S105, S107, and S110, for example, the arithmetic unit 21 confirms game information or user information about the user and monitors whether the trigger conditions are met or not.

For example, the arithmetic unit 21 at the time of login initially confirms game fixed information or game progress information, which can be obtained at the time of login, as game information, confirms user fixed information or user reaction information, which can be obtained at the time of login, as user information, and confirms whether the trigger conditions are met due to, for example, changes of the information since the last login.

Moreover, the arithmetic unit 21 during a login confirms sequentially input game progress information as game information, confirms sequentially input user reaction information as user information, and confirms whether the trigger conditions are met.

In the monitoring of the layout changing trigger in step S103, the arithmetic unit 21 monitors whether a trigger for changing the layout of the lockers 201 in the club house 210 for the logged-in user has occurred.

When detecting the trigger, the arithmetic unit 21 advances to step S104 to change the layout of the lockers in the club house 210 according to the contents of the trigger. In other words, as shown in Fig. 12, the order of layout is changed to the other lockers La viewed from the own locker LH of the user.

When the trigger is not detected, the process advances from step S103 to step S105.

The trigger conditions in steps S103 and S104 and the layout change according to the conditions are exemplified as (A1) to (A6) below.

### (A1)

When the user selects a player in a quiz from the quiz screen 140, the selection serves as a trigger condition. The locker 201 of the selected player is placed near the own locker LH at the time of selection or after the selection.

The player selected in the quiz is, for example, a player selected in a field roulette quiz, and the position of a ball hit by the player is predicted.

### (A2)

When a player actively playing in real time in an actual game is determined from the game information, the determination of the active player serves as a trigger condition. The locker 201 of the selected player is placed near the own locker LH.

For example, when detecting a player having hit a homerun, a player having struck a batter out, or a player having made a fine play, the arithmetic unit 21 places the locker 201 of the player near the own locker LH of the user. In this case, the layout of the lockers may be changed only for the favorite players of the user. For example, when a player assigned with a like or a gift in the past is playing actively, the locker 201 of the player may be placed near the own locker LH.

### (A3)

In the presence of another user having the same items 203, the locker 201 of another user is placed near the own locker LH.

Alternatively, if another user does not have common items 203 but has a common hobby or preferences in profile information on the user, the locker 201 of another user is placed near the own locker LH.

Furthermore, the order of other lockers La may be set according to the type of items placed in the locker 201.

Alternatively, the designation of an item by the user in the own locker LH may serve as a trigger, and the locker 201 of another user may be placed near the own locker LH if the items 203 are owned or placed in the locker 201.

### (A4)

If another user has participated in or is participating in the same quiz, the locker 201 of another user is placed near the own locker LH.

If another user has the same answer in a quiz in which the user is participating, the locker 201 of another user may be placed near the own locker LH.

### (A5)

If another user has watched a game in the same stadium at the same date and time or another user is currently watching the game in the same stadium, the locker 201 of another user is placed near the own locker LH.

Moreover, the locker 201 of another user with similar seat information may be placed near the own locker LH. In addition, the order from the own locker LH may be set in order of proximity to the seat.

### (A6)

A user may be selected on the basis of the ranking of owned points to place the locker 201 near the own locker LH. For example, the lockers 201 of high-ranking users are placed near the own locker LH in the order of rankings. Alternatively, the lockers 201 of users ranked near the user of the own locker LH are placed on the left and right of the own locker LH.

In the foregoing examples, "placed near" may refer to a location adjacent to the own locker LH. In some conditions, the order of precedence may be determined to place the lockers in the order of precedence from the own locker LH.

In addition to placement near the own locker, the locker room screens 200 of other users having the same items 203, hobbies, and preferences may be introduced or recommended for viewing.

In the monitoring of the item updating trigger in step S105, the arithmetic unit 21 monitors whether a trigger for changing the items 203 has occurred, the items 203 being placed in the locker 201 in the locker room screen 200 of the user. When detecting the trigger, the arithmetic unit 21 advances to step S106 to update the items 203 according to the contents of the trigger.

When the trigger is not detected, the process advances from step S105 to step S107.

The trigger conditions in steps S105 and S106 and the item update according to the conditions are exemplified as (B1) to (B4) below.

Hereinafter, "highlighting" refers to, for example, an example in which the items 203 are placed at highlighted locations in the locker 201, an example in which the items 203 hidden on the locker 201 are displayed in the locker 201, an example of the moving items 203, an example of the temporarily extended items 203, and an example of the items 203 under a spotlight.

### (B1)

When the user selects a player in a quiz of the quiz screen 140, the selection serves as a trigger condition. The items 203 associated with the selected player are highlighted at the time of selection or after the selection.

In this case, if the own locker LH has the items 203 associated with the player, the items 203 are highlighted. The items 203 associated with the player may be highlighted if the locker room screen 200A of another person is viewed with the items 203. Thus, it is understood that the user at the destination has the items 203 associated with the selected player, which triggers communications.

If the items 203 are highlighted in the own locker LH, the items 203 may be highlighted also when others view the own locker LH.

### (B2)

When a player actively playing in real time in an actual game is determined from the game information, the determination of the active player serves as a trigger condition. The items 203 associated with the selected player are highlighted. The items may be highlighted when the locker room screen 200A of another person is viewed.

### (B3)

In the presence of another user having the same items, the common items 203 are highlighted when the locker room screen 200A of another user is viewed.

### (B4)

If another user has watched a game in the same stadium at the same date and time or another user is currently watching the game in the same stadium, the items 203 associated with the game are highlighted when the locker room screen 200A of another user is viewed. The items 203 associated with the game are assumed to be the items 100 such as a ball generated according to the game in the game watching screen 90 or items such as memorial goods generated according to, for example, records achieved in the game.

Furthermore, in the presence of another user sitting or having sat in a nearby seat, the items 203 associated with the game in which another user has sat in the nearby seat may be highlighted when the locker room screen 200A of another user is viewed.

In the monitoring of the poster changing trigger in step S107, the arithmetic unit 21 monitors whether a trigger for changing the image of the poster 204 of the locker 201 for the user has occurred.

When detecting the trigger, the arithmetic unit 21 advances to step S108 to change the image of the poster 204 according to the contents of the trigger. When the trigger is not detected, the process advances from step S107 to step S109.

The trigger conditions in steps S107 and S108 and the image change according to the conditions are exemplified as (C1) to (C4) below.

Hereinafter, "preferential display" may refer to an immediate image change at the detection of the trigger or may refer to the setting of displaying an image to be preferentially displayed at any subsequent timing.

Moving images or still images as images to be displayed include contents provided by a baseball team or shooting contents posted by the user or another user.

### (C1)

When the user selects a player in a quiz of the quiz screen 140, the selection serves as a trigger condition. An image of the selected player as a subject is preferentially displayed on the poster 204.

### (C2)

When the user selects a field using the field roulette in the quiz content screen 141, the selection serves as a trigger condition. An image associated with the selected field is preferentially displayed on the poster 204 at the time of selection or after the selection.

The image associated with the field is assumed to be an image of a play in the field.

When the user selects a pitching course using a strike roulette, the selection serves as a trigger condition. An image associated with the selected pitching course is preferentially displayed on the poster 204 at the time of selection or after the selection. The image is, for example, an image of a pitcher having struck a batter out or an image of a strikeout.

### (C3)

When the user answered correctly in a quiz of the quiz screen 140, the correct answer serves as a trigger condition. An image associated with the answer of the quiz is preferentially displayed on the poster 204 at the time of the confirmation of the correct answer or after the confirmation. The image is assumed to be, for example, an image of a player or an image of a play as a target of the correct answer of the quiz.

### (C4)

An image captured near a seat is preferentially displayed on the poster 204 at the time of acquisition of seat information or after the acquisition such that the acquisition of the seat information about the user serves as a trigger. The image is assumed to be, for example, an image photographed and posted nearby by the user.

In the foregoing examples, a moving image or a still image photographed by an ordinary user may be displayed as the poster 204 of a user. Thus, the user having provided the image used for the poster 204 may be rewarded. For example, the user may be rewarded with points or items.

In step S109, the arithmetic unit 21 determines whether the speaker 206 is placed in the locker 201 of the user. If the speaker 206 is not placed, the process advances to step S112.

If the speaker 206 is placed, the arithmetic unit 21 advances to step S110 to monitor a sound changing trigger.

When detecting the trigger, the arithmetic unit 21 advances to step S111 to change the setting of sound, which is to be output during monitoring of the locker room screen 200, according to the contents of the trigger.

When the trigger is not detected, the process advances from step S110 to step S112.

The trigger conditions in steps S110 and S111 and the image change according to the conditions are exemplified as (D1) to (D3) below.

The sound to be output is, for example, the theme song of a player or sound of a live report and commentary of another user.

### (D1)

When the user selects a player in a quiz of the quiz screen 140, the selection serves as a trigger condition. Sound around the selected player, for example, a commentary about the player or the theme song of the player is set to be output at the time of selection or after the selection.

### (D2)

When a player actively playing in real time in an actual game is determined from the game information, the determination of the active player serves as a trigger condition. A commentary about the selected player or the theme song is set to be output.

### (D3)

When the user selects a field using the field roulette in the quiz content screen 141, the selection serves as a trigger condition. A commentary about the player positioned around the selected field or the theme song of the player is set to be output at the time of selection or after the selection.

When the user selects a pitching course using the strike roulette, the selection serves as a trigger condition. A commentary about the selected pitching course or the theme song of a pitcher having struck a batter out is set to be output at the time of selection or after the selection.

Through the processing of Fig. 15, the forms of the lockers 201 displayed in the locker room screens 200 and 200A, for example, the layout in the club house 210 and the items 203, the poster 204, and sound output in the locker 201 are changed in sequence.

### <4. Linked game>

A linked game provided on the linked game screen 300 in Fig. 5 will be described below.

The linked game refers to various games that are not directly related to watched sports such as baseball and can be played on the screen of the terminal device 5. In other words, the contents are irrelevant to a watched game. However, it is assumed that parameters and usable game items or the like change according to game information or user information in an actual sports game.

Fig. 16 shows the relationship among the data server 30, the locker 201, the item 203, and linked games 301.

As shown in Fig. 3, for example, the EPTS data, the sensing data SS, the image data VD, stats data, historical data, and analysis data are obtained from the data server 30 in the game linked service. The data is reflected on the locker room screen 200 or the like.

The data is referred to as metadata 220 that is provided to the linked games 301. However, the data from the data server 30 includes data not reflected on the locker room screen 200. The data not reflected on the locker room screen 200 may be included in the metadata 220 and provided to the linked games 301.

Furthermore, the items 203 of various types are associated with the locker 201 of the locker room screen 200. Asset data 221 in the item 203, for example, a moving image and a still image of the item 203, sound associated with the item 203, and attribute data of the item 203 are provided as parameters 222 of a player to the linked games 301.

The metadata 220 and the asset data 221 include game fixed information, user fixed information, static data such as items based on the information, game progress information, user reaction information, and dynamic data such as items based on the information.

In the linked games 301, the provided metadata 220 and asset data 221 are rearranged and converted to be used for setting the parameters of the games. For example, the power and level of a game character may be changed by the metadata 220 and the asset data 221. In another example, the asset data 221, for example, items registered and stored in the locker 201 may be replaced with other items in the linked game. For example, a bat placed in the locker 201 is transformed into a sword used in the linked game.

Thus, the user can enjoy the game in which attributes or game items are changed according to, for example, the progress of the game, a change of the locker room screen 200, and the acquisition of the items 203.

### <5. Conclusion and modification example>

In the above-described embodiment, the following effects are obtained.

The information processing device 70 serving as the main server 2 of the embodiment includes the arithmetic unit 21 that performs processing for changing, on the basis of game information, the form of the virtual locker 201 located in the virtual club house 210.

For example, the arithmetic unit 21 controls processing for editing a locker image or sound to be provided as the locker room screen 200 to the user, the image or sound being edited according to game fixed information or game progress information. Thus, service can be provided to the user such that the user can enjoy a change of the locker room screen 200 according to the game information.

The form may be changed immediately when game information serving as a trigger is input, or priority may be set in response to the input of game information serving as a trigger, and then the form may be preferentially changed according to the game information.

In the embodiment, the arithmetic unit 21 manages user information about a game and performs processing for changing the form of the locker 201 of the locker room screen 200 according to the user information in addition to the game information.

The arithmetic unit 21 changes the display and sound pattern of the locker room screen 200 also by using user fixed information or user reaction information that serves as user information, so that the locker 201 is changed according to, for example, the attribute and action of the user. Thus, the user can acquire the locker 201 as a virtual space specific to the user, achieving the provision of service that increases the level of satisfaction of the user.

The form may be changed immediately when user information serving as a trigger is input, or priority may be set in response to the input of user information serving as a trigger, and then the form may be preferentially changed according to the user information.

The embodiment described an example in which the user information includes user reaction information indicating user interaction for a game.

The arithmetic unit 21 acquires, as the user reaction information, information including an answer to a quiz and a user position, and then the locker 201 changes according to the information, so that a user action is reflected to increase the enjoyment of the user.

The embodiment described an example in which the arithmetic unit 21 performs processing for changing the positional relationship among the plurality of lockers 201 in the virtual space, as processing for changing the form of the locker room screen 200.

The user can view the locker room screen 200A of another person from the locker room screen 200 serving as a website. The arithmetic unit 21 changes the order of arrangement, for example, the order of arrangement with respect to the locker room screen 200 of the user in response to a trigger based on the game information and the user information. Thus, the locker room screen 200 of a player supported by the user or another user having common preferences can be easily viewed by the user or can be introduced to the user.

The embodiment described an example in which the arithmetic unit 21 performs processing for changing the items 203 placed in the locker 201, as processing for changing the form of the locker 201.

The items 203 of various types can be placed in or around the locker 201 in the locker room screen 200. The arithmetic unit 21 replaces the items 203, adds the items 203, prevents the placement of the items 203, or changes the positions of the items 203 in response to a trigger based on the game information or the user information. Thus, the contents of the locker room screen 200 are changed according to the game information or the user information, allowing users to view their own characteristic locker rooms.

The embodiment described an example in which the arithmetic unit 21 performs processing for changing the image of the poster 204 included in the locker 201, as processing for changing the form of the locker 201.

The locker room screen 200 displays the poster 204 in or around the locker 201. In this case, the arithmetic unit 21 changes an image to be used as the poster 204, in response to a trigger based on the game information or the user information. Thus, the contents of the locker room screen 200 are changed according to the game information or the user information, thereby increasing the enjoyment of the locker room screen 200.

The embodiment described an example in which the arithmetic unit 21 performs processing for changing sound to be output from the terminal device 5 during the viewing of the locker 201, as processing for changing the form of the locker 201. When the locker room screen 200 is viewed, the theme song of a player or other types of music and the sound of a commentary or the like can be output. In this case, the arithmetic unit 21 changes the voice data of output sound in response to a trigger based on the game information or the user information. This can output a variety of sounds according to the game information or the user information, thereby providing a nonmonotonic viewing environment.

In the described example, sound is output only when the speaker 206 is placed in the locker 201. Sound may be output regardless of the presence or absence of the speaker 206. By the possession of the speaker 206, sound may be output regardless of whether the speaker 206 is located in the locker 201.

The embodiment described an example in which the arithmetic unit 21 performs control to implement a change relative to a player determined as an active layer in the current game on the basis of the game information, as processing for changing the form of the locker 201.

For example, the arithmetic unit 21 changes the form of the locker 201 of a player actively playing in real time such that the locker 201 of the player is placed near the locker 201 of the user.

For example, the arithmetic unit 21 makes a form change such that the items 203 associated with a player actively playing in real time are highlighted in the locker room screens 200 and 200A.

Moreover, for example, the arithmetic unit 21 makes a form change such that a still image or a moving image of a subject, a player actively playing in real time, is displayed as the poster 204.

For example, the arithmetic unit 21 changes sound output to play a commentary mainly covering a player actively playing in real time or the theme song of the player actively playing in real time.

The foregoing processing is merely exemplary. Through the processing, service can be achieved such that the forms of the display and sound output or the like of the locker room screen 200 are changed by reflecting the current progress of a real game.

The embodiment described an example in which the arithmetic unit 21 performs control to implement a change relative to a player included in answer information of a quiz, as processing for changing the form of the locker 201.

For example, the arithmetic unit 21 makes a form change such that the locker 201 of a player selected in a quiz by the user is placed near the locker 201 of the user.

Moreover, for example, the arithmetic unit 21 makes a form change such that the items 203 associated with a player selected in a quiz by the user are highlighted in the locker room screen 200 of the user.

For example, the arithmetic unit 21 makes a form change such that a still image or a moving image of a subject, a player selected in a quiz by the user, is displayed as the poster 204.

Furthermore, for example, the arithmetic unit 21 makes a form change such that a still image or a moving image associated with a field selected by the user in a quiz shown in Fig. 8 is displayed as the poster 204. Alternatively, the arithmetic unit 21 outputs a commentary mainly covering a play associated with a selected field or outputs the theme song of a player located in the selected field. Furthermore, for example, the arithmetic unit 21 makes a form change such that a still image or a moving image associated with plays answered in a quiz by the user is displayed as the poster 204, the plays including a strikeout, a home run, a hit, and a fine play.

Alternatively, the arithmetic unit 21 outputs a commentary mainly covering a play answered in a quiz or outputs the theme song of a player relating to the play.

Moreover, for example, the arithmetic unit 21 makes a form change such that a still image or a moving image associated with a correct answer of the user to a quiz is displayed as the poster 204.

The foregoing processing is merely exemplary. Through the processing, the form is changed in the locker room screen 200 by reflecting the answer of the user to a quiz, achieving service with reflected user interaction.

The embodiment described an example in which the arithmetic unit 21 performs control to implement a change on the basis of information about the items 203 owned by the user, as processing for changing the form of the locker 201.

For example, the arithmetic unit 21 makes a form change such that the locker 201 of another user having the same items as the user is placed near the locker 201 of the user.

For example, when the user has viewed the locker room screen 200A of another user, the arithmetic unit 21 makes a form change such that the same items as items owned by the viewing user are highlighted in the locker room screen 200A of another user.

The foregoing processing is merely exemplary. Through the processing, service can be achieved such that sympathy is aroused between users and another user having a similar hobby is easily recognized.

The embodiment described an example in which the arithmetic unit 21 performs control to implement a change relative to participation information of a quiz, as processing for changing the form of the locker 201.

For example, the arithmetic unit 21 makes a form change such that the locker 201 of another user who is participating in or has participated in the same quiz as the user in the past is placed near the locker 201 of the user.

The foregoing processing is merely exemplary. Through the processing, service can be achieved with a reflected common experience of users.

The embodiment described an example in which the arithmetic unit 21 performs control to implement a change relative to information about sports watching in a stadium, as processing for changing the form of the locker 201.

For example, the arithmetic unit 21 makes a form change such that for another user who has watched a game in the same stadium at the same date and time or another user who is currently watching the game in the same stadium, the locker 201 is placed near the locker 201 of the user.

The foregoing processing is merely exemplary. Through the processing, service can be achieved with a reflected common experience of users.

The embodiment described an example in which the arithmetic unit 21 performs control to implement a change relative to position information as processing for changing the form of the locker 201.

For example, the arithmetic unit 21 makes a form change such that the locker 201 of another user at a seat position close to the user is placed near the locker 201 of the user.

For example, when the user has viewed the locker room screen 200A of another user, the arithmetic unit 21 makes a form change such that the items associated with a past game on a nearby seat are highlighted.

For example, when the user has viewed the locker room screen 200A of another user, the arithmetic unit 21 makes a form change such that a still image or a moving image photographed from a nearby seat is displayed as, for example, the poster 204.

The foregoing processing is merely exemplary. Through the processing, service can be achieved with a reflected common experience of users who are watching or have watched a game at close locations in a stadium.

The embodiment mainly described the processing of the arithmetic unit 21 of the main server 2. The processing of the arithmetic unit 21 may be partially or entirely performed by the CPU of the terminal device 5. For example, the game linked service function 40 of the arithmetic unit 21 may be installed as an application program in the terminal device 5, and the processing of, for example, the item/content generation unit 45, the locker processing unit 47, and the linked game processing unit 48 in Fig. 3 may be performed by the terminal device 5. Other functions, that is, the functions of the game information acquisition unit 41, the user information acquisition unit 42, the game analysis unit 43, the quiz generation unit 44, and the storage control unit 46 or the like may be provided for the terminal device 5, and processing by the functions may be performed in the terminal device 5.

In the example, the game linked service is linked with a baseball game. The game linked service can be applied to various sports. The sports include, for example, soccer, American football, rugby, basketball, volleyball, tennis, and golf. In particular, in the case of sports using an EPTS system, the service is preferably applied to ball games. As a matter of course, the service may be applied to sports other than ball games. For example, the service is also applicable to gymnastics, skating, track and field, swimming, judo, kendo, boxing, and fencing.

The items 203 are determined according to sports. An item for soccer is a soccer ball, an item for boxing is a boxing glove, and an item for tennis is a racket or the like.

The game information is also determined for each sport.

For the game information, an example of stats data of baseball was described. As a matter of course, the stats data varies among sports. For soccer, stats data is provided as follows:
· The number of goals: the number of goals during a season
· The number of shots: the number of shooting actions
· The number of shots on goal: the number of shots made into the goal
· The number of last passes: the number of passes leading to chances to the goal
· The number of one-touch passes: the number of passes with one touch
· The number of air battles: the number of plays competing for a ball in the air
· The number of tackles: the number of tackles for stealing a ball from a ball holder
· Running distance: a running distance of each player during a game

A program according to the embodiment is a program that causes, for example, a CPU, a DSP (digital signal processor), and an AI processor or the like or the information processing device 70 including the unit and the processors to perform the processing of Fig. 15.

In other words, the program according to the embodiment is a program that causes the information processing device to perform processing for changing the form of the locker 201 in a virtual space on the basis of game information serving as information about a game, the virtual space containing the one or more virtual lockers 201 located in the virtual club house 210.

With this program, the information processing device 70 constituting the information provision system 1 according to the embodiment can be implemented in, for example, a computer device, a portable terminal device, and a device capable of performing other types of information processing.

The program can be recorded in advance in an HDD serving as a recording medium embedded in a device such as a computer device or a ROM in a microcomputer including a CPU.

Alternatively, the program can be stored (recorded) temporarily or perpetually on a removable recording medium such as a flexible disc, a CD-ROM (Compact Disc Read-Only Memory), a MO (Magneto Optical) disc, a DVD (Digital Versatile Disc), a Blu-ray Disc (registered trademark), a magnetic disk, a semiconductor memory, or a memory card. Such removable recording media can be provided as so-called packaged software.

In addition, such a program can be installed in a personal computer or the like from a removable recording medium, or can also be downloaded from a download site via a network such as a LAN (Local Area Network) or the Internet.

Furthermore, such a program is suitable for widely providing the information processing device 70 constituting the information provision system 1 according to the embodiment. For example, by downloading the program to portable terminal devices such as a smartphone and a tablet, an imaging device, a mobile phone, a personal computer, a game device, a video device, and a PDA (Personal Digital Assistant), these devices can be caused to function as the information processing device 70 constituting the information provision system 1 of the present disclosure.

Note that the effects described in the present specification are merely examples and are not limited, and other effects may be provided.

The present technique can also be configured as follows:
(1)
   An information processing device including an arithmetic unit that performs processing for changing the form of a virtual locker in a virtual space on the basis of game information serving as information about a game, the virtual space containing one or a plurality of virtual lockers located in a virtual club house.
(2)
   The information processing device according to (1), wherein the arithmetic unit manages user information about the game and performs processing for changing the form of the virtual locker according to the game information and the user information.
(3)
   The information processing device according to (2), wherein the user information includes user reaction information indicating user interaction relative to the game.
(4)
   The information processing device according to any one of (1) to (3), wherein the arithmetic unit performs, as processing for changing the form of the virtual locker, processing for changing the positional relationship among the plurality of virtual lockers in the virtual space.
(5)
   The information processing device according to any one of (1) to (4), wherein the arithmetic unit performs, as processing for changing the form of the virtual locker, processing for changing a digital item image included in the image of the virtual locker.
(6)
   The information processing device according to any one of (1) to (5), wherein the arithmetic unit performs, as processing for changing the form of the virtual locker, processing for changing a poster image included in the image of the virtual locker.
(7)
   The information processing device according to any one of (1) to (6), wherein the arithmetic unit performs, as processing for changing the form of the virtual locker, processing for changing sound to be output from a terminal device during the viewing of the virtual locker.
(8)
   The information processing device according to any one of (1) to (7), wherein the arithmetic unit performs, as processing for changing the form of the virtual locker, control to implement a change relative to a player determined as an active player in the current game on the basis of the game information.
(9)
   The information processing device according to (2) or (3), wherein
   the user information includes answer information to a quiz provided in relation to the game, and
   the arithmetic unit performs, as processing for changing the form of the virtual locker, control to implement a change relative to a player included in the answer information.
(10) The information processing device according to any one of (2), (3), and (9), wherein
   the user information includes information about an item owned by a user,
   the arithmetic unit performs, as processing for changing the form of the virtual locker, control to implement a change on the basis of the information about the item owned by the user.
(11) The information processing device according to any one of (2), (3), (9), and (10), wherein
   the user information includes participation information about a quiz provided in relation to the game, and
   the arithmetic unit performs, as processing for changing the form of the virtual locker, control to implement a change relative to the participation information.
(12) The information processing device according to any one of (2), (3), (9), (10), and (11), wherein
   the user information includes information about sports watching by the user in a stadium, and
   the arithmetic unit performs, as processing for changing the form of the virtual locker, control to implement a change relative to the information about sports watching in the stadium.
(13) The information processing device according to any one of (2), (3), (9), (10), (11), and (12), wherein
   the user information includes position information about the user in the stadium, and
   the arithmetic unit performs, as processing for changing the form of the virtual locker, control to implement a change relative to the position information .
(14) An information processing method including, by an information processing device:
   performing: processing for changing the form of a virtual locker in a virtual space on the basis of game information serving as information about a game, the virtual space containing one or a plurality of virtual lockers located in a virtual club house.
(15)
   A program causing an information processing device to perform: processing for changing the form of a virtual locker in a virtual space on the basis of game information serving as information about a game, the virtual space containing one or a plurality of virtual lockers located in a virtual club house.

### [Reference Signs List]

1 Information provision system
2 Main server
3 Score data server
4 Sensor
5 Terminal device
5a Display part
10 Imaging device
11 Recording unit
12 EPTS data generation unit
21 Arithmetic unit
22 Presentation control unit
23 Storage
30 Data server
40 Game linked service function
41 Game information acquisition unit
42 User information acquisition unit
43 Game analysis unit
44 Quiz generating unit
45 Item/content generation unit
46 Storage control unit
47 Locker processing unit
48 Linked game processing unit
70 Information processing device
71 CPU
200, 200A Locker room screen
201 Locker
203 Item
204 Poster
206 Speaker
210 Club house

## Claims

1. An information processing device comprising an arithmetic unit that performs processing for changing a form of a virtual locker in a virtual space on a basis of game information serving as information about a game, the virtual space containing one or a plurality of virtual lockers located in a virtual club house.

2. The information processing device according to claim 1, wherein the arithmetic unit manages user information about the game and performs processing for changing the form of the virtual locker according to the game information and the user information.

3. The information processing device according to claim 2, wherein the user information includes user reaction information indicating user interaction relative to the game.

4. The information processing device according to claim 1, wherein the arithmetic unit performs, as processing for changing the form of the virtual locker, processing for changing a positional relationship among the plurality of virtual lockers in the virtual space.

5. The information processing device according to claim 1, wherein the arithmetic unit performs, as processing for changing the form of the virtual locker, processing for changing a digital item image included in an image of the virtual locker.

6. The information processing device according to claim 1, wherein the arithmetic unit performs, as processing for changing the form of the virtual locker, processing for changing a poster image included in an image of the virtual locker.

7. The information processing device according to claim 1, wherein the arithmetic unit performs, as processing for changing the form of the virtual locker, processing for changing sound to be output from a terminal device during viewing of the virtual locker.

8. The information processing device according to claim 1, wherein the arithmetic unit performs, as processing for changing the form of the virtual locker, control to implement a change relative to a player determined as an active player in a current game on a basis of the game information.

9. The information processing device according to claim 2, wherein
the user information includes answer information to a quiz provided in relation to the game, and
the arithmetic unit performs, as processing for changing the form of the virtual locker, control to implement a change relative to a player included in the answer information.

10. The information processing device according to claim 2, wherein
the user information includes information about an item owned by a user,
the arithmetic unit performs, as processing for changing the form of the virtual locker, control to implement a change on a basis of the information about the item owned by the user.

11. The information processing device according to claim 2, wherein
the user information includes participation information about a quiz provided in relation to the game, and
the arithmetic unit performs, as processing for changing the form of the virtual locker, control to implement a change relative to the participation information.

12. The information processing device according to claim 2, wherein
the user information includes information about sports watching by the user in a stadium, and
the arithmetic unit performs, as processing for changing the form of the virtual locker, control to implement a change relative to the information about sports watching in the stadium.

13. The information processing device according to claim 2, wherein
the user information includes position information about a user in a stadium, and
the arithmetic unit performs, as processing for changing the form of the virtual locker, control to implement a change relative to the position information.

14. An information processing method comprising, by an information processing device: performing processing for changing a form of a virtual locker in a virtual space on a basis of game information serving as information about a game, the virtual space containing one or a plurality of virtual lockers located in a virtual club house.

15. A program causing an information processing device to perform: processing for changing a form of a virtual locker in a virtual space on a basis of game information serving as information about a game, the virtual space containing one or a plurality of virtual lockers located in a virtual club house.
